# EUROPÄISCHE PATENTSCHRIFT

(11) **EP 1 081 469 B1**
(45) Veröffentlichungstag und Bekanntmachung des Hinweises auf die Patenterteilung: **10.09.2008**
(21) Anmeldenummer: 00115986.2
(22) Anmeldetag: 26.07.2000
(51) Int. Cl.: G01F 23/24

(54) **Verfahren zur Messung des Flüssigkeitsfüllstandes in einem Behälter**
Method to measure liquid level in a container
Procédé de mesure du niveau de liquide dans un réservoir

(30) Priorität: 28.08.1999 DE 19940962
(43) Veröffentlichungstag der Anmeldung: 07.03.2001
(73) Patentinhaber: Bayerische Motoren Werke Aktiengesellschaft, 80809 München (DE)
(72) Erfinder: Hartmann, Volker, 82296 Schöngeising (DE); Kuhn, Joachim, 81247 München (DE)

(56) Entgegenhaltungen:
- DE-A- 3 742 783
- US-A- 5 600 528
- US-A- 5 685 194

## Beschreibung

Die Erfindung bezieht sich auf ein Verfahren zur Messung des Flüssigkeitsfüllstandes in einem Behälter nach dem Oberbegriff des Patentanspruchs 1.

Ein derartiges Verfahren ist beispielsweise aus der US 5,600,528 bekannt. Bei diesem bekannten Verfahren zur Messung eines Flüssigkeitsfüllstandes ist die Verwendung von zwei identischen Temperaturfühlern bekannt, die wahlweise jeweils als Mess- oder als Referenz-Sensor verwendet werden können.

Bei dem aus der DE 37 42 783 A1 bekannten Verfahren besteht ein thermischer Ölstandgeber für Kraftfahrzeuge im wesentlichen aus zwei identischen temperaturabhängigen gestreckten Widerstandselementen, die beide in den Motorölsumpf eintauchen und den Bereich der möglichen Füllstandsschwankungen überspannen. Die daraus resultierenden elektrischen Widerstände werden in einer Brückenschaltung betrieben, wobei ein Widerstandselement als Referenzelement zur Kompensation der Öltemperatur dient und das andere Widerstandselement als Meßelement zur Messung des Ölstandes verwendet wird. Das Meßelement wird, gesteuert durch ein elektronisches Steuergerät, wiederholt kurzzeitig mit Heizstrom beaufschlagt und kühlt anschließend wieder ab. Die von der Eintauchtiefe des Meßelements abhängige Abkühlzeit ist ein Maß für den Ölstand. Das elektronische Steuergerät ermittelt diese Abkühlzeit durch die Messung der Differenz der Spannungen, die an den beiden Meßwiderständen anliegen.

Dieser bekannte thermische Ölstandsensor besteht also aus einer Brückenschaltung, bei der ein Brückenzweig durch eine getaktete Beaufschlagung mit Heizstrom thermisch verstimmt wird. Die häufige Temperaturveränderung im Meßelement und in den damit verbundenen anderen elektrischen Bauteilen führt über einen längeren Zeitraum betrachtet zu einer unsystematischen Verstimmung aufgrund einer unsymmetrischen Alterung der elektrischen Bauteile. Hierdurch entsteht eine unerwünschte Meßungenauigkeit.

Eine Meßungenauigkeit ergibt sich auch dadurch, daß die im Öl befindlichen Brückenwiderstände je nach Ölstand unterschiedliche Temperaturen haben. Besonders bei teilentleertem Behälter teilt sich das Meßelement in einen Widerstandsanteil, der sich im Öl befindet, und in einen Widerstandsanteil, der sich in Luft befindet, auf. Insbesondere bei Schwappbewegungen, wie sie bei Kraftfahrzeugen besonders auftreten, stellt sich eine Spannung am Meßelement ein, der nicht exakt dem momentanen Ölstand entspricht. Hinzu kommt, daß der Widerstandsanteil, der durch die Luft bestimmt wird, einer höheren Temperaturbeanspruchung ausgesetzt ist als der Widerstandsanteil, der durch das Öl bestimmt ist, da während des Heizvorganges bereits ein Wärmefluß in das Öl stattfindet.

Es ist daher Aufgabe der Erfindung, ein Verfahren eingangs genannter Art derart zu verbessern, daß die Genauigkeit einer Messung des Flüssigkeitsfüllstandes in einem Behälter erhöht wird und unabhängig von der Bauteilalterung erhalten bleibt.

Diese Aufgabe wird durch die Merkmale des Patentanspruchs 1 gelöst. Vorteilhafte Weiterbildungen sind die Gegenstände der abhängigen Ansprüche.

Die Messung des Flüssigkeitsfüllstandes in einem Behälter wird mittels zwei identischen temperaturabhängigen Widerstandselementen durchgeführt, die derart im Behälter angeordnet sind, daß sie den Bereich der möglichen Füllstandsschwankungen überspannen. Bei einer ersten Messung wird ein erstes Widerstandselement als Meßelement mit Heizstrom beaufschlagt. Das zweite Widerstandselement wird als Referenzelement verwendet. Mittels eines elektronischen Steuergeräts wird die Differenz der Spannungen, die an den beiden Widerstandselementen jeweils anliegen, ermittelt. In einer zweiten Messung wird das zweite Widerstandelement als Meßelement und das erste Widerstandelement als Referenzelement verwendet. Ebenso wird erfindungsgemäß bei den weiteren Messungen vorgegangen. Die Widerstandselemente werden also immer abwechselnd jeweils als Meßelement oder als Referenzelement betrieben. Im übrigen kann das Verfahren zur Ermittlung des Flüssigkeitsfüllstandes z. B. ebenso weitergeführt werden, wie aus der DE 37 42 783 A1 bekannt ist.

Dieses aus der US 5,600,528 bekannte Verfahren führt zu einer langsameren und zu einer symmetrischen Alterung der Bauteile, wodurch die Brückenschaltung nicht mehr ungewollt nur einseitig verstimmt werden kann.

Erfindungsgemäß ist die Wiederholungsrate der Messungen bzw. der abwechselnden Beheizung der Widerstandselemente so hoch, daß sich die Widerstandsanteile der beiden Widerstandselemente, die sich z. B. aufgrund eines teilentleerten Behälters in Luft befinden, möglichst wenig abkühlen und somit zumindest nahezu gleiche Teilwiderstandswerte aufweisen, unabhängig davon welcher der beiden Widerstandselemente gerade Meßelement und welcher gerade Referenzelement ist. Hierdurch wird eine noch bessere Meßgenauigkeit erreicht, da die Heiz- und Abkühlzeiten nur noch vom Flüssigkeitsfüllstand abhängen.

Die Anwendung des erfindungsgemäßen Verfahrens ist besonders in Kraftfahrzeugen vorteilhaft, da erstens aufgrund von Schwappbewegungen eine besonders genaue und häufige Messung erforderlich ist und zweitens eine hohe Verfügbarkeit gefordert ist.

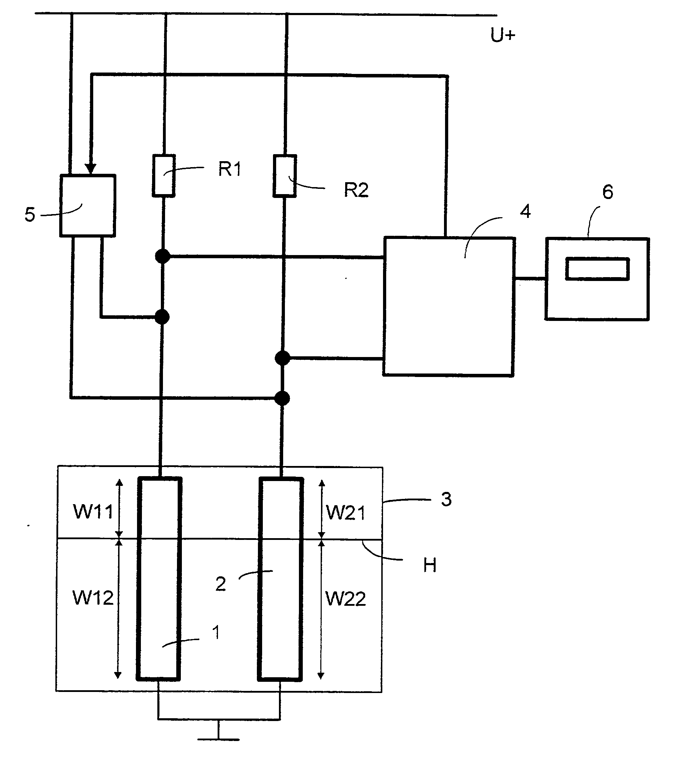

In der Zeichnung ist ein Ausführungsbeispiel dargestellt. Sie zeigt eine mögliche Vorrichtung zur Durchführung des erfindungsgemäßen Verfahrens.

Zwei identische temperaturabhängige Widerstandselemente 1 und 2 sind in einem Behälter 3 für Flüssigkeit derart angebracht, daß sie den Bereich der möglichen Füllstandsschwankungen überspannen. Weiterhin werden die beiden Widerstandselemente 1 und 2 zusammen mit den Widerständen R1 und R2 in einer Brückenschaltung betrieben, die mit Spannung U+ versorgt wird. Der Einfluß der Flüssigkeitstemperatur ist damit kompensiert. Als einzige Größe, die einen meßbaren Unterschied der elektrischen Widerstände der Widerstandselemente 1 und 2 hervorruft, ist eine unterschiedliche Temperatur der Widerstandselemente 1 und 2 durch einseitiges Beheizen mittels einer Heizung 5, insbesondere durch Beaufschlagen mit Heizstrom. Durch ein elektronisches Steuergerät 4, das mit einem Display 6 zur Anzeige des Flüssigkeitsfüllstandes und ggf. auch der Flüssigkeitstemperatur verbunden sein kann, wird die Heizung 5 getaktet angesteuert.

Die beiden Widerstandselemente 1 und 2 werden abwechselnd, gesteuert durch das elektronische Steuergerät 4, wiederholt kurzzeitig mit Heizstrom beaufschlagt. Nach jedem Heizvorgang wird eine Abkühlzeit abgewartet, in der das Steuergerät 4 die Diagonalspannung der Brückenschaltung, d. h. die Differenz der Spannungen, die an den beiden Widerstandselementen 1 und 2 abfallen, mißt. Bei einer ersten Messung wird das Widerstandselement 1 als Heiz- bzw. Meßelement verwendet und das Widerstandselement 2 als (unbeheiztes) Referenzelement. Bei jeder zweiten Messung wird die Zuordnung Meß- und Referenzelement zu den beiden Widerstandselementen 1 und 2 umgedreht. Somit werden beide Widerstandselemente abwechselnd als beheizte Meßelemente eingesetzt und damit in gleicher Weise beansprucht. Hierdurch ergibt sich eine symmetrische Alterung, die keinen Einfluß auf die Meßgenauigkeit ausübt.

Im Behälter ist eine Füllstandshöhe H als Beispiel eingezeichnet. Somit weisen die Widerstandselemente 1 und 2 jeweils Widerstandanteile W11 und W21, die sich oberhalb der Füllstandshöhe H in Luft befinden, und Widerstandsanteile W12 und W22 auf, die sich unterhlb der Füllstandshöhe H in Flüssigkeit befinden. Je schneller das Takten der Beheizung vorgenommen wird, umso mehr gleichen sich die Widerstandanteile W11 und W21 unabhängig davon an, welches der beiden Widerstandselemente gerade das Meßelement und welches das Referenzelement ist.

Die Wiederholungsrate der Messungen bzw. der Beheizungen ist vorzugsweise sehr hoch, etwa 2 bis 3 Mal pro Sekunde, da bei einer Anwendung des erfindungsgemäßen Verfahrens eine quasi-kontinuierliche Messung erwünscht ist. Die maximal mögliche Wiederholungsrate ist jedoch durch die erforderlichen Heiz- und Abkühlzeiten für eine Messung beschränkt.

Jedes Widerstandselement dient nunmehr in kurzen Abständen immer wieder als Meßelement bzw. Heizelement, wodurch die in Luft befindlichen Widerstandanteile W11 und W21 der beiden Widerstandselemente 1 und 2 nahezu ständig aufgeheizt sind. Somit ist ein etwa gleicher Widerstandsanteil (W11 ≈ W21), der durch die Luft bestimmt wird, auf beiden Brückenseiten vorhanden. Die Zeitkonstante für eine Abkühlung der Widerstandsanteile W11 und W21 ist deutlich größer als bei den Widerstandanteilen W12 und W22, die durch die Flüssigkeit bestimmt wird, so daß die in Luft befindlichen Widerstandsanteile W11 und W21 der beiden Widerstandelemente 1 und 2 annähernd die gleiche Temperatur und damit auch die gleichen Teilwiderstandswerte aufweisen, unabhängig davon, ob sie als Meß- oder als Referenzelement verwendet werden. Damit ist die Abkühlzeit nur noch vom Flüssigkeitsfüllstand abhängig. Dadurch wird eine deutlich höhere Meßgenauigkeit erreicht.

## Patentansprüche

1. Verfahren zur Messung des Flüssigkeitsfüllstandes (H) in einem Behälter (3) mittels zwei identischen temperaturabhängigen Widerstandselementen (1, 2), die derart im Behälter (3) angeordnet sind, daß sie den Bereich der möglichen Füllstandsschwankungen überspannen, bei dem ein Widerstandselement als Meßelement mit Heizstrom beaufschlagt wird, bei dem das andere Widerstandselement als Referenzelement verwendet wird und bei dem mittels eines elektronischen Steuergeräts (4) die Differenz der Spannungen, die an den beiden Widerstandselementen (1, 2) jeweils abfallen, ermittelt wird, wobei jedes der beiden Widerstandselemente (1, 2) abwechselnd einmal als Meßelement und das andere Mal als Referenzelement betrieben wird, **dadurch gekennzeichnet, daß** die Wiederholungsrate der abwechselnden Beheizung der Widerstandselemente (1, 2) so hoch ist, daß sich die in Luft befindlichen Widerstandsariteile (W11, W21) der beiden Widerstandselemente (1, 2) zwischen den Beheizungsvorgängen nur unwesentlich abkühlen.

2. Verwendung des Verfahrens nach Patentanspruch 1 zur Ölstandsmessung in Kraftfahrzeugen.

## Claims

1. A method for measuring the liquid level (H) in a container (3) by means of two identical temperature-dependent resistance elements (1, 2), which are arranged in the container (3) in such a way that they span the range of possible level fluctuations, in which a resistance element is subjected to a heating current as the measurement element, in which the other resistance element is used as the reference element and in which the difference between the voltages which drop in each case across the two resistance elements (1, 2) is determined by means of an electronic control apparatus (4), each of the two resistance elements (1, 2) alternately being operated once as the measurement element and the next time as the reference element, **characterised in that** the repetition rate of the alternating heating of the resistance elements (1, 2) is so high that the resistance fractions (W11, W21) located in air of the two resistance elements (1, 2) cool only insignificantly between the heating processes.

2. Use of the method according to claim 1 to measure the oil level in motor vehicles.

## Revendications

1. Procédé de mesure du niveau d'un liquide (H) dans un réservoir (3) à l'aide de deux éléments de résistance (1, 2) identiques, dépendants de la température, installés dans le réservoir (3) de façon à chevaucher la plage des variations possibles du niveau de remplissage, l'un des éléments de résistance, constituant un élément de mesure recevant un courant de chauffage et l'autre élément de résistance servant d'élément de référence, et un appareil de commande électronique (4) détermine la différence des tensions aux bornes des deux éléments de résistance (1, 2), chacun des deux éléments de résistance (1, 2) fonctionnant alternativement soit comme élément de mesure soit comme élément de référence,
**caractérisé en ce que**
la fréquence de répétition du chauffage alterné des éléments de résistance (1, 2) est suffisamment élevée pour que les parties de résistance (W11, W21) des deux éléments (1, 2) qui se trouvent dans l'air ne refroidissent que de manière négligeable entre deux phases de chauffage.

2. Application du procédé selon la revendication 1 pour mesurer le niveau d'huile dans les véhicules automobiles.
